# EUROPEAN PATENT APPLICATION

(11) **EP 3 667 538 A1**
(43) Date of publication of application: **17.06.2020**
(21) Application number: 18843005.2
(22) Date of filing: 06.08.2018
(51) Int. Cl.: G06F 21/62

(54) **AUTHORIZATION METHOD FOR DISPLAYING CURRENT PERMISSIONS STATUS OF ALL SYSTEM USERS**

(30) Priority: 07.08.2017 CN 201710668291
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/099064
(87) International publication number: WO 2019/029499

(57) **Abstract**

An authorization method for displaying current permission status of all system users includes: selecting one form; selecting one element item of one of the elements of the form; displaying all system users in the system after the element item is selected, and displaying the current permission status of each system user for the selected element item; and authorizing the selected element item for one or more of the system users. After all system users in a system are displayed, current permission status of each system user for the selected element item is displayed, thereby making it convenient for an authorization operator to make modifications on this basis and authorize the selected element item for the system user, and improving authorization efficiency.

## Description

### BACKGROUND

### Technical Field

The present invention relates to an authorization method in a management software system such as an ERP, and in particular, to an authorization method for displaying current permission status of all system users.

### Related Art

Role-based access control (RBAC) is one of the most researched and matured permission management mechanisms for database permissions in recent years. It is considered to be an ideal candidate to replace conventional mandatory access control (MAC) and discretionary access control (DAC). The basic idea of role-based access control (RBAC) is to divide different roles according to different functional positions in an enterprise organization view, encapsulate an access permission of database resources in roles, and allow users to indirectly access the database resources by being assigning different roles to the users.

A large number of tables and views are often built in large-scale application systems, which makes the management and permissions of database resources very complicated. It is very difficult for the user to directly manage the access and permissions of the database resources. It requires the user to have a very thorough understanding of the database structure and to be familiar with the use of the SQL language. Once the structures or security requirements of the application systems have changed, a large number of complex and cumbersome permission changes are required, and the security vulnerabilities caused by some unexpected authorization errors are very likely to occur. Therefore, designing a simple and efficient permission management method designed for large-scale application systems has become a common requirement for system and system users.

The role-based permission control mechanism can manage the access permissions of the system simply and efficiently, which greatly reduces the burden and cost of the system permission management, and makes the system permission management more compliant with the business management specifications of the application system.

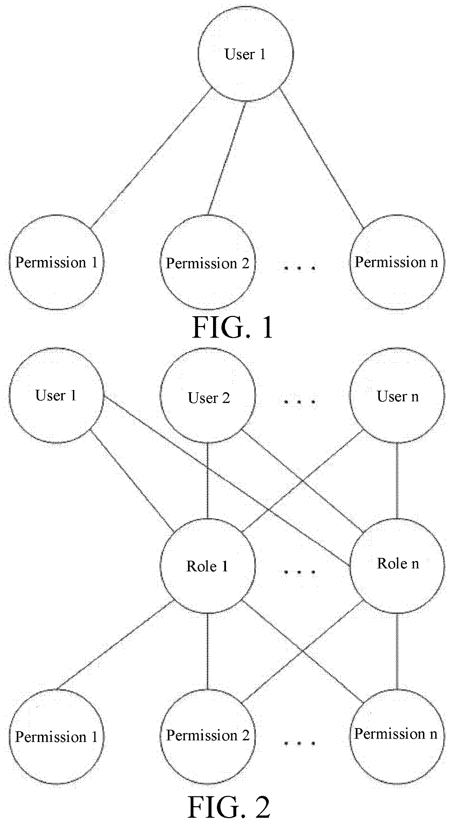

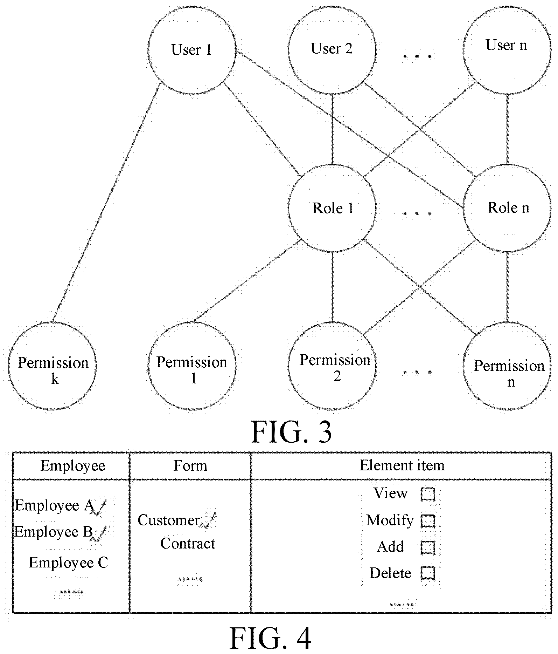

However, the conventional role-based user permission management method adopts a "role-to-user one-to-many" relation mechanism, where the "role" is a group or class in nature, that is, one role can simultaneously correspond to/be related to multiple users, and the role is similar to a post or a position or a type of work and other concepts, the permissions authorized to a user under this relation mechanism are basically divided into the following three forms: 1, as shown in Figure 1, the permissions are directly authorized to the user, where the disadvantage is that the workload is large, and the operation is frequent and troublesome; 2. As shown in Figure 2, the role (having the nature of a class/group/post/type of work) is authorized (one role can be related to multiple users), and the user obtains the permission through its role; 3. As shown in Figure 3, the above two methods are combined.

In the above descriptions, as both 2 and 3 need to authorize the role having the nature of a class/group, and the way of authorization through the role in the nature of class/group/post/type of work has the following disadvantages: 1. when the user's permissions change, the operation is difficult: in the actual process of using a system, it is often necessary to adjust the user's permissions during the operation process. For example, when the employee's permission changes, the authority of an employee related to the role changes, we can't change the permissions of the entire role because of the change in the individual employee's permissions, because this role is also related to other employees whose permissions have not changed. So to cope with this situation, either create a new role to satisfy the employee whose permissions remain unchanged, or directly authorize (disengaged from the role) from the employee based on the permission requirements. The above two processing methods not only require a long time for the role authorization in the case of a large number of role permissions, but also are easy to make mistakes, the user is cumbersome and troublesome to operate, and errors occur easily resulting in loss to the system user.
2. It is difficult to remember the specific permissions contained in a role for a long time: if the role has many permission function points, it will be difficult to remember the specific permissions of the role, and it is even more difficult to remember the differences in permissions of roles with similar permissions. If a new user needs to be associated, it is impracticable to accurately determine how to select a role for relation.
3. Because user permissions change, more roles will be created (if you do not create a new role, it will greatly increase the authorization directly to the user), and it is more difficult to distinguish the specific differences between permissions of the roles.
4. When a user is transferred from a post, if many permissions of the transferred user need to be assigned to other users, separating the permissions of the transferred users and creating roles to relate to other users respectively are necessary. Such operations are not only complicated and time-consuming, but also prone to errors.

As shown in FIG. 4, in an existing authorization method such as a form authorization method, if a form is selected after two or more employees are selected, the authorization status of the selected form authorized by the selected employee cannot be displayed. Similarly, if two or more employees are selected after a form is selected, the authorization status of the selected form authorized by the selected employee cannot be displayed. Consequently, errors are likely to occur when an authorizer authorizes multiple users simultaneously.

During the use of a system, a permission often needs to be adjusted for management purposes. For example, for management purposes, the company now needs to adjust a permission to view/modify a customer telephone number field (content of the field) on a customer form (for example, to adjust some users with a view permission in such a way that they have no view permission, adjust some users with no view permission in such a way that they have a view permission, adjust some users with no modification permission in such a way that they have a modification permission, adjust some users with a modification permission in such a way that they have no modification permission, and leave the permissions of some users unadjusted). An existing method for achieving this has to select users and forms consecutively or select forms and users consecutively, and then authorize the customer telephone number field of the forms. If the users are authorized one by one, the workload is enormous and error-prone. If multiple or all users are selected for authorizing, the customer telephone number field can only be authorized uniformly. Once authorized, all selected users have the same permissions, but cannot be authorized differently. Critically, the previous authorization status of each user for the customer telephone number field cannot be displayed. Without reference to the previous authorization status of each user for the customer telephone number field, the authorizer is unaware of the previous authorization status of the user for the customer telephone number field, and the authorizer is very likely to have errors in authorization.

### SUMMARY

### Technical Problems

The present invention aims to overcome the defect of the prior art and provides an authorization method for displaying current permission status of all system users. After all system users in a system are displayed, the current permission status of each system user for the selected element item is displayed, thereby making it convenient for an authorizer to make modifications on this basis and authorize the selected element item for the system user, improving authorization efficiency, and greatly reducing authorization errors.

### Solutions to Problems

### Technical Solutions

The object of the present invention is achieved by the following technical solutions. An authorization method for displaying current permission status of all system users comprising: selecting one form; selecting one element item of one of the elements of the form; displaying all system users in the system after the element item is selected, and displaying current permission status of each system user for the selected element item; and authorizing the selected element item for one or more of the system users.

Preferably, types of the form element comprise a form operation permission, a form field, a time-nature field, a form field value, or one or more thereof, and the form field value is determined by selection or determined automatically.

Preferably, the system users comprise a role, a user, an employee, a group, a class, a template, one or more thereof, the role is an independent individual not a group/class. During the same period, one role can only be related to a unique user, while one user is related to one or more roles.

Preferably, if a department is selected for a role when or after the role is created, the role belongs to the department, the role is authorized according to the work content of the role, name of the role is unique in the department, and the number of the role is unique in the system. When the said user is transferred from a post, the user's relation to an original role is canceled, and the user is related to a new role.

Preferably, after an element item in a type of form element is selected, an authorizer who last authorizes the selected element item for each system user and time of such authorization are displayed separately.

An authorization method for displaying the current permission status of all system users, comprising: selecting one statistical list; selecting an element item in a type of statistical list element from the statistical list; displaying all system users in a system after the element item is selected, and displaying current permission status of each system user for the selected element item; and authorizing the selected element item for one or more of the system users.

Preferably, types of the statistical list element comprising an operation permission of statistical list, a column name in the statistical list, a time-nature column name, a column name value in the statistical list, or one or more thereof, and the column name value in a statistical list is determined by selection or determined automatically.

Preferably, the system users comprising a role, a user, an employee, a group, a class, a template, or one or more thereof, the role is an independent individual not a group/class. During the same period, one role can only be related to a unique user, while one user is related to one or more roles.

An authorization method for displaying current permission status of all system users, comprising: selecting a menu; displaying all system users in the system after the menu is selected, and displaying current permission status of each system user for the selected menu; and authorizing the selected menu for one or more of the system users.

Preferably, the system users include a role, a user, an employee, a group, a class, a template, or one or more thereof. The role is an independent individual not a group/class. During the same period, one role can only be related to a unique user, while one user is related to one or more roles.

### Beneficial Effects of the Invention

### Beneficial Effects

The beneficial effects of the present invention are: (1) In the present invention, after all system users in a system are displayed, the current permission status of each system user for the selected element item is displayed, thereby making it convenient for an authorizer to make modifications on this basis and authorize the selected element item for the system user, improving authorization efficiency, and greatly reducing authorization errors.
(2) During the authorization in the present invention, all system users in the system are displayed after the element item is selected, thereby avoiding consequences such as authorization omission.
(3) After an element item of a type of form element is selected, the authorizer who last authorizes the selected element item for each system user and the time of such authorization are displayed separately, thereby making it convenient to investigate responsibility in the case of a permission error of the system user and determine whether the system user needs to be authorized.
(4) The conventional permission management mechanism defines the role as the nature of a group, a type of work, a class or the like. The role is in a one-to-many relation to the user. In the actual process of using a system, the user's permissions often need to be adjusted during the operation process. For example, in processing the change of an employee's permissions, when the permissions of the employee related to the role have changed, it is improper to change the permissions of the entire role due to the change in the permissions of the individual employee, because this role is also related to other employees whose permissions remain unchanged. To cope with this situation, either a new role is created to fit the employee whose permissions have changed, or permissions are directly authorized to the employee (disengaged from the role) based on permission requirements. The above two processing methods not only take a long time but also cause mistakes easily during the role authorization in the case of a large number of role permissions. It is cumbersome for a user to operate, and errors occur easily, resulting in loss to the system user.
   However, under the method of the present application, as the role is an independent individual, the object can be achieved by changing the permissions of the role. Although the method of the present application seems to increase the workload during system initialization, by means of copying or the like, the role can be created or authorized more efficiently than the conventional roles having the nature of a group. As it is unnecessary to consider the commonality of the roles having the nature of a group when satisfying the related users, the solutions in the present application make the permission setting clear and explicit. Especially after the system has been used for a period of time (the permissions of the user/role have changed dynamically), the solutions in the present application can significantly improve the permission management efficiency for the system user when using the system, make the dynamic authorization simpler, more convenient, clearer and more explicit, and improve the efficiency and reliability of the permission setting.
(5) The conventional role authorization method with the nature of a group is prone to errors. The method provided in the present application significantly reduces the probability of authorization errors, because the method of the present application only needs to consider the role as an independent individual, without considering the commonalities of multiple users related to the role having the nature of a group under the conventional method. Even if the authorization errors occur, only the user related to the role is affected. However, in the case of the conventional role having the nature of a group, all users related to the role will be affected. Even if the authorization errors occur, the correction method of the present application is simple and takes a short time, while in the case of the conventional role having the nature of a group, the commonality of the permissions of all users related to the role needs to be considered during the error correction. The modification is cumbersome, complex, and error-prone when there are many function points, and in many cases, the problem cannot be solved unless a new role is created.
(6) In the conventional group-based role authorization method, if the role has many permission function points, as time goes by, it is difficult to remember the specific permissions of the role, and it is even more difficult to remember the permission of roles with similar permissions. If a new user needs to be related, it cannot be accurately determined how to select a relation. In the method of the present application, the role itself has the nature of a post number/a work station number, such that the selection can be made easily.
(7) When a user is transferred from a post, if many permissions of the transferred user need to be assigned to other users, in processing, it is necessary to distinguish the permissions of the transferred user and then create roles to be related to other users respectively. The operations are complicated, time-consuming, and prone to errors.
   The method of the present application is as follows: The transferred user is related to several roles. When the user is transferred, the relation of the user to the roles in the original department is first canceled (the canceled roles may be re-related to other users), and then the user is related to a role in a new department. The operation is simple and not error-prone.
(8) A department needs to be selected when or after a role is created. After the role belongs to the department, the department cannot be replaced. Reasons why the department to which the role belongs cannot be replaced are as follows: Reason 1: As the role in the present application is equivalent to a work station number/a post number in nature, different station numbers/post numbers have different work content/permissions. For example, the role of a salesperson 1 under a sales department and the role of a developer 1 under a technical department are two completely different station numbers or post numbers, and have different permissions. Reason 2: If the department (sales department) to which the role of the salesperson 1 belongs is replaced by the technical department without changing the permissions of the role of the salesperson 1, the role that owns the permissions of the sales department exists in the technical department. This leads to management confusion and security vulnerabilities.

### BRIEF DESCRIPTION OF THE DRAWINGS

### Description of Drawings

FIG. 1 is a schematic diagram in which a system directly authorizes a user in the prior art;
FIG. 2 is a schematic diagram in which a system authorizes a role having the nature of a group/class in the prior art;
FIG. 3 is a schematic diagram in which a system both directly authorizes a user and authorizes a role having the nature of a group/class in the prior art;
FIG. 4 is a schematic diagram of authorizing multiple users in the prior art;
FIG. 5 is a flowchart of authorizing a form for a system user according to the present invention;
FIG. 6 is a schematic diagram after an element item in a form element is selected according to the present invention;
FIG. 7 is a schematic diagram after an element item in another form element is selected according to the present invention;
FIG. 8 is a schematic diagram after an element item in another form element is selected according to the present invention;
FIG. 9 is a schematic diagram after an element item in another form element is selected according to the present invention;
FIG. 10 is a schematic diagram in which a system authorizes a user through a role having the nature of an independent individual according to the present invention;
FIG. 11 is a flowchart of authorizing a statistical list for a system user according to the present invention; and
FIG. 12 is a flowchart of authorizing a menu for a system user according to the present invention.

### DETAILED DESCRIPTION

### Description of Embodiments

The following describes technical solutions of the present invention in further detail with reference to accompanying drawings, but the protection scope of the present invention is not limited to the following.

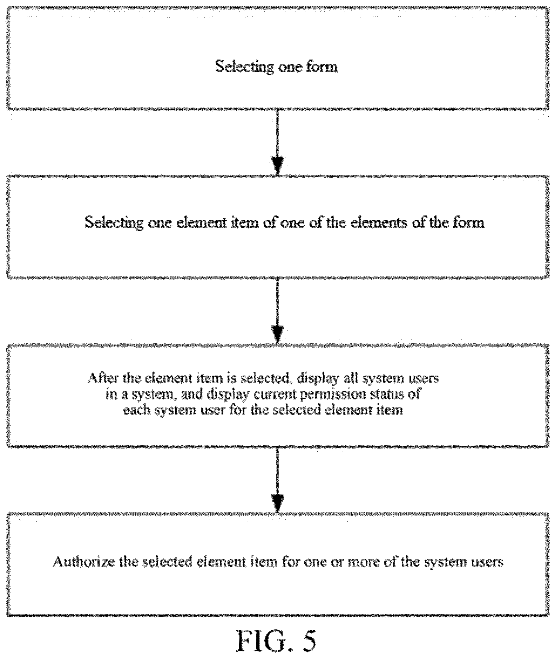

[Embodiment 1] As shown in FIG. 5, an authorization method for displaying the current permission status of all system users comprising the following steps. S11: select a form.

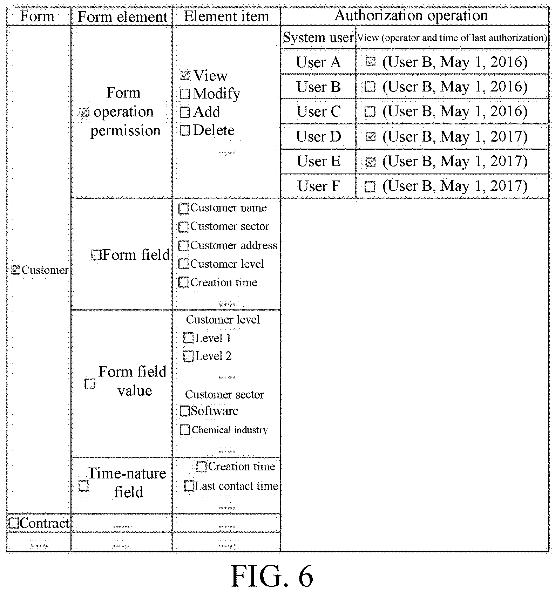

For example, in FIG. 6, a customer form is selected.

S12: select an element item in a type of form element of the form.

Types of the form element include a form operation permission, a form field, a time-nature field, a form field value, or one or more thereof.

Element items of the form operation permission include adding, deleting, viewing, modifying, viewing related information, printing, importing and exporting, or one or more thereof. For example, the element items in the form field of a customer form include a customer name, a customer sector, a customer address, and the like (that is, fields of the form). The element item of the form field value is a field value of a field. The field value herein specially refers to a field value that is determined by selection or determined automatically, for example, optional values "level 1, level 2, level 3... " of a "customer level" field in the customer form, or optional values "software, chemical industry, building materials..." of a "customer sector" field, or optional values "sales department I, sales department II, sales department III..." of a "department in charge of customer" field, or optional values "Zhang San, Li Si, Wang Wu..." of a "person in charge of customer" field, or optional values "Beijing, Shanghai, Guangzhou..." of a "customer city" field, or the like (the field value rather than the field corresponding to the field value needs to be authorized with respect to the type of the form field value). The field values of each field include a "null" field value and an "all" field value ("null" means "the field value is null", and "all" means "all field values"). The element items of the time-nature field are "creation time" and "last modification time" of a form or another field (for example, "creation time" and "last modification time" herein are both element items of a time-nature field and element items of a form field). Viewing related information is a function of viewing related information of the form. For example, viewing related information of a customer form is to view a related contract, view a related order, viewing a payment receipt record, viewing a shipment record, and other viewing operations.

When the type of form element is a form field value, authorizing an element item thereof is factually to authorize the form data corresponding to the element item (an example of form data: in the case of a customer form, a customer is a piece of customer form data).

For example, in FIG. 6, "view" (an element item) in a form operation permission (a form element) in a customer form is selected.

The form field value is determined by selection (for example, in the fields of a customer form, the field values of a customer sector field include manufacturing, finance, aviation, and other sector options available for a form operator to select. For example, in the fields of a contract form, the field values of a contract signatory field include Zhang San, Li Si, Wang Wu, and other company employee options available for the form operator to select. Such field values are not input manually, but are obtained by selection. For another example, in the fields of a contract form, the field values of a field such as contract level, customer city, contract signing department, department in charge of contract, person in charge of contract performance, or role in charge of contract are also determined by selection) or automatically determined (for example, in the fields of a customer form, the field values of a creator field include Zhang San, Li Si, Wang Wu, and other company employee options. However, when this customer is created, the value of the creator field is automatically the current operator. It is the same as the field values of the fields such as form recorder, form preparation role, and form preparer. The field values of such fields are automatically determined based on relevant rules).

Further, after an element item of the time-nature field is selected, all system users and six period setting formats for each user are displayed so that the authorizer can set time accordingly. In addition, the current setting period of each system user is displayed. The six period setting formats specifically comprises: a period from a time point earlier than current time by a fixed time length to the current time, a period from a start time to the current time, a period from an end time to a system initial time, a period from the start time to the end time, a period with a time field of a null value, and a period from the system initial time to the current time. The period from the system initial time to the current time includes the period with a time field of a null value. The start time and the end time are set by the authorizer.

The following describe the six periods with examples: in the case of a period from a time point earlier than current time by a fixed time length to the current time, for example, on June 20, 2017, an employee A is authorized to view contract forms (contracts) signed in a period from a time point earlier than June 20, 2017 by six days to June 20, 2017 (that is, the current time, not a definite time point). That is, on June 20, 2017, the employee A can view the contract forms (contracts) which are signed in the period from June 15, 2017 to June 20, 2017. On June 21, 2017, the employee A can view the contract forms (contracts) which are signed in the period from June 16, 2017 to June 21, 2017. On June 22, 2017, the employee A can view the contract forms (contracts) which are signed in the period from June 17, 2017 to June 22, 2017, and so on. That is, the length of this period is fixed, but the start time and the end time are variable.

In the case of a period from a start time to the current time (the current time is dynamic), for example, on May 1, 2015, the employee A is authorized to view the contract forms (contracts) which are signed in the period from February 1, 2015 to the current day (current time). Therefore, the employee A can view all contract forms (contracts) which are signed in the period from February 1, 2015 to May 1, 2015. On May 2, 2015, the employee A can view all contracts signed in the period from February 1, 2015 to May 2, 2015 (further, the start time may be expressed as a date not inclusive of the start time. When the start time is a date not inclusive of the start time, the employee A cannot view the contracts signed on February 1, 2015, but can only view all contracts signed after February 1, 2015).

In the case of a period from the end time to the system initial time, for example, if the employee A is authorized to view the contract forms (contracts) signed in the period from February 1, 2015 to the system initial time, the employee A can view all contract forms/contracts signed in the period from February 1, 2015 to the system initial time (that is, the employee A can view all contracts in the system signed on and before February 1, 2015). (Further, the end time may be expressed as a date not inclusive of the end time. When the end time is a date not inclusive of the end time, the employee A cannot view the contracts signed on February 1, 2015, but can only view the contracts signed before February 1, 2015. Further, it is appropriate to set no system initial time, but set only the end time, and therefore, the employee A can view all the contracts signed at and before the end time, or the employee A can view all the contracts signed before the end time).

In the case of a period from the start time to the end time, for example, if the employee A is authorized to view the contract forms (contracts) signed in the period from February 1, 2015 to June 1, 2015, the employee A can view all contract forms (contracts) signed from February 1, 2015 to June 1, 2015.

In the case of a period with a time field of a null value, For example, a delivery time in a contract is a non-mandatory item, and the delivery time in some contract forms (contracts) is left blank. If the employee A is authorized to view the contract forms (contracts) in which the time field value of the delivery time is null, the employee A can view all contract forms (contracts) in which the delivery time is left blank.

In the case of a period from the system initial time to the current time (the current time is dynamic), For example, on June 1, 2017, if the employee A is authorized to view the contract forms (contracts) signed in the period from the system initial time to the current time, then on June 1, 2017, the employee A can view all contract forms (contracts) which are signed in the period from the system initial time to June 1, 2017; on June 2, 2017, the employee A can view all contract forms (contracts) which are signed in the period from the system initial time to June 2, 2017, and so on. The periods from the system initial time to the current time includes the period with a time field of a null value (further, it is appropriate to not set a specific time value of the system initial time and the current time. As long as the "period from the system initial time to the current time" is set for the employee A, the employee A can view all contracts in the system signed at any time, including those with a signature time of a null value).

The start time and end time are set by the authorizer.

S13: after the element item is selected, display all system users in a system, and display current permission status of each system user for the selected element item.

For example, in FIG. 6, after "view" (an element item) is selected, system users such as a user A, a user B, a user C, a user D, a user E, and a user F are displayed, of which user A, user D, and user E currently have a permission for viewing.

Further, after an element item in a type of form element is selected, an authorizer who last authorizes the selected element item for each system user and time of such authorization are displayed separately, thus making it convenient to determine whether the system user needs to be authorized. For example, an authorizer needs to perform authorization operations on 100 roles, but the authorizer completes the authorization operations for only 70 roles in a day. When the authorizer continues to perform authorization operations on roles the next day, the role that needs to be authorized may be located according to the authorizer or the last time of authorizing a role. For another example, according to the last time of authorizing a role, the authorizer can find how long the permission of the role has remained unchanged, thereby helping to determine whether the role needs to be authorized again.

For example, in FIG. 6, the authorizer who last authorizes user A, user B, user C, user D, user E, and user F to have a form operation permission of viewing a customer form is the user B, the last time of authorizing user A, user B, and user C to have a form operation permission of viewing a customer form is May 1, 2016, and the last time of authorizing user D, user E, and user F to have a form operation permission of viewing a customer form is May 1, 2017.

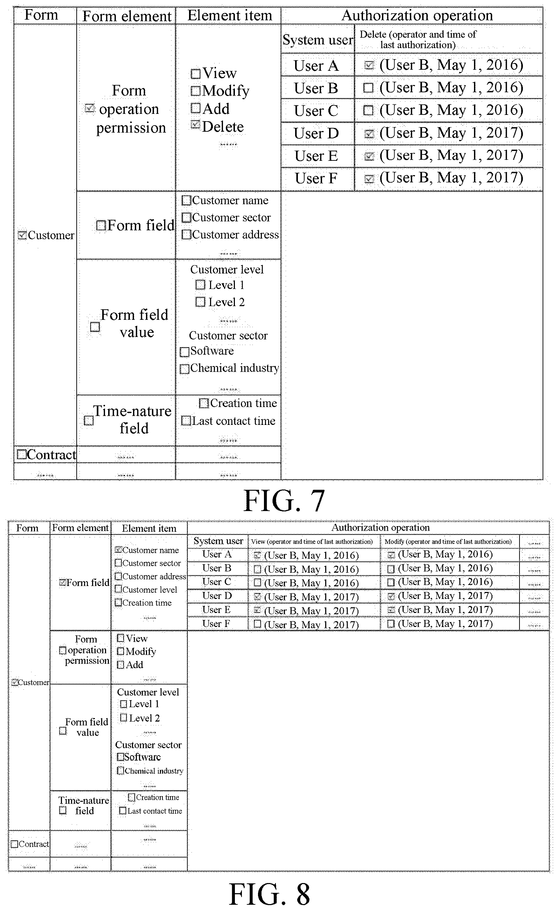

In FIG. 7, "delete" (an element item) in a form operation permission (a form element) in a customer form is selected. After "delete" (an element item) is selected, system users such as a user A, a user B, a user C, a user D, a user E, and a user F are displayed, of which the user A, the user D, the user E, and the user F currently have a permission of deletion. The authorizer who last authorizes user A, user B, user C, user D, user E, and user F to have a form operation permission of deleting a customer form is the user B, the last time of authorizing user A, user B, and user C to have a form operation permission of deleting a customer form is May 1, 2016, and the last time of authorizing user D, user E, and user F to have a form operation permission of deleting a customer form is May 1, 2017.

In FIG. 8, "customer name" (an element item) in a form field (a form element) in a customer form is selected. After "customer name" (an element item) is selected, system users such as a user A, a user B, a user C, a user D, a user E, and a user F are displayed, of which user A, user D, and user E currently have permissions of viewing and modifying a customer name. The authorizer who last authorizes user A, user B, user C, user D, user E, and user F to have form field operation permissions of viewing and modifying a customer form is the user B, the last time of authorizing user A, user B, and user C to have form field operation permissions of viewing and modifying a customer form is May 1, 2016, and the last time of authorizing user D, user E, and user F to have form field operation permissions of viewing and modifying a customer form is May 1, 2017.

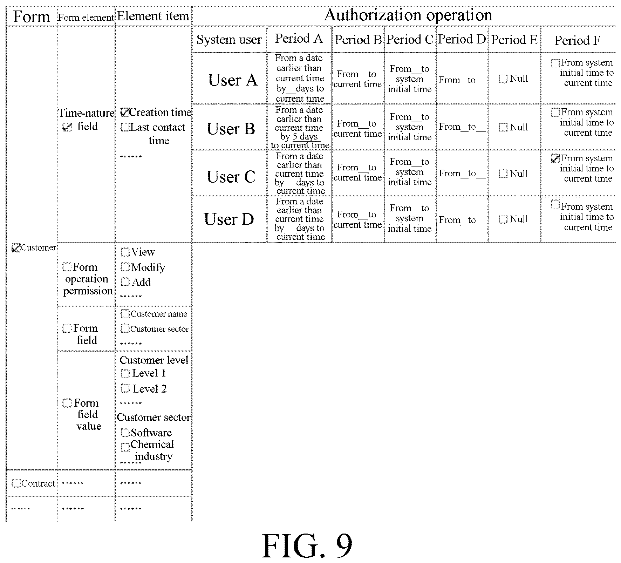

In FIG. 9, "creation time" (an element item) in a time-nature field (a form element) in a customer form is selected. After "creation time" (an element item) is selected, system users such as user A, user B, user C, and user D are displayed. The current period of user B is from a date earlier than the current time by 5 days to the current time, and the current period of user C is from the system initial time to the current time. In setting a period, a period A, a period B, a period C, and a period D are set based on the original authorization state, and a period E and a period F are selected based on the original authorization state.

In FIG. 9, period A is a period from a time point earlier than current time by a fixed time length to the current time, period B is a period from a start time to the current time, period C is a period from an end time to a system initial time, period D is a period from the start time to the end time, period E is a period with a time field of a null value, and period F is a period from the system initial time to the current time.

Further, after the element item is selected, all system users in the system are displayed, wherein "all system users in the system" are "all system users in the system who can be authorized by the selection operator".

The system users include a role, a user, an employee, a group, a class, a template, or one or more thereof.

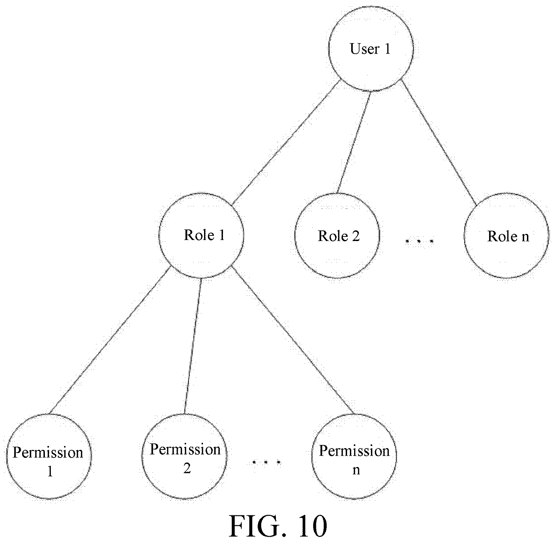

As shown in FIG. 10, the role is an independent individual not a group/class. During the same period, one role can only be related to a unique user, while one user is related to one or more roles. The user obtains a permission of the related role. When or after the role is created, a department is selected for the role, so that the role belongs to the department. The role is authorized according to its work content, the name of the role is unique in the department, and the number of the role is unique in the system.

Definition of a role: A role does not have the nature of a group/a class/a category/a post/a position/a type of work or the like, but has a non-collective nature. The role is unique and is an independent individual. Applied in an enterprise or an institution, the role is equivalent to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation of users to roles is as follows: if Zhang San, the company's employee, serves as a deputy general manager 2 of the company and also serves as a manager of Beijing sales department I, the roles to which Zhang San needs to be related are the deputy general manager 2 and the manager of Beijing sales department I, and Zhang San owns the permissions of the two roles.

The concept of conventional roles is a group/a class/a post/a position/a type of work in nature, and one role can correspond to multiple users. However, in the present application, the concept of "role" is equivalent to a post number/a work station number, and is also similar to the role in a film and television drama: one role in the same period (in childhood, juvenile, middle-age...) can be played by only one actor or actress, but one actor or actress may play multiple roles respectively.

When the user is transferred from a post, the user's relation to the original role is canceled, and the user is related to a new role. The user loses the permissions of the original role and obtains the permissions of the new role automatically.

When the employee is recruited, after the role is related to the user corresponding to the employee, the user automatically obtains the permissions of the related role. When the employee resigns, after the relation between the user corresponding to the employee and the role related to the user is canceled, the user automatically loses the permissions of the original related role.

After the role is created, a user may be related to the role in the process of creating the user, or may be related to the role at any time after the user is created. After the user is related to the role, the user can be released from the relation to the role at any time, and the relation of the user to another role may be created at any time.

One employee corresponds to one user, one user corresponds to one employee, and the employee determines (obtains) permissions through the role related to the corresponding user.

Further, the employee and the user are bound permanently. After the user corresponds to the employee, the user belongs to the employee, and the user can no longer be related to other employees. If the employee resigns, the user cannot correspond to other employees. After the employee is recruited again, the employee still uses the original user.

S14: authorize the selected element item for one or more of the system users.

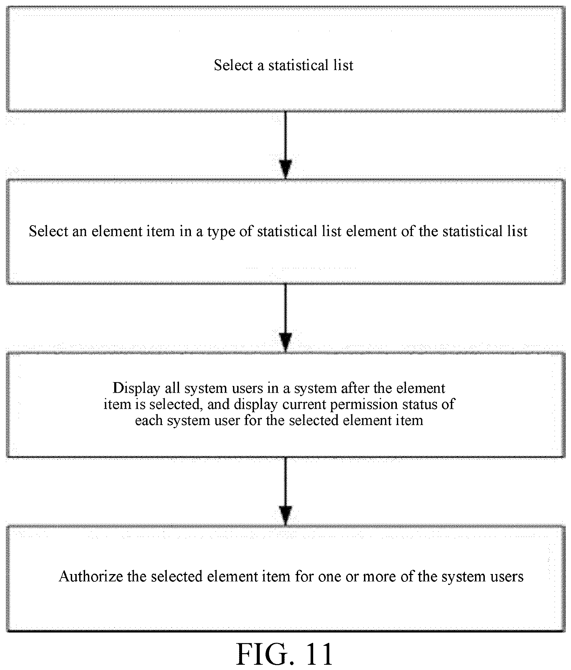

[Embodiment 2] As shown in FIG. 11, an authorization method for displaying current permission status of all system users comprising the following steps. S21: select a statistical list.

S22: select an element item in a type of statistical list element of the statistical list.

Types of the statistical list element include an operation permission of statistical list, a column name in the statistical list, a time-nature column name, a column name value in the statistical list, or one or more thereof. The column name value is a column value of a column that includes the column name (for example, a column name in the statistical list is "customer level", and the "level 1, level 2, level 3..." displayed in the statistical list are column values of the customer level. For another example, another column name is "count of visits", and "12, 5, 8..." displayed in the statistical list are column values of "count of visits").

When the type of an element of the statistical list is a column name value of statistical list, an operation of authorizing an element item of the element is factually to authorize the data corresponding to the element item.

The element items of operation permissions of the statistical list comprise viewing, querying, and the like. For example, the element items of a column name of a customer statistical list include a customer level, a customer sector, a customer region, and the like (that is, authorizing a column name in the statistical list is to authorize the column that includes the column name or the data corresponding to this column). The element item of the column name value of the statistical list is the column name value corresponding to the column name. The column name value herein specially refers to a column name value that is determined by selection or determined automatically, for example, optional (corresponding) column name values "level 1, level 2, level 3..." of a "customer level" column name in the customer statistical list, or optional (corresponding) column name values "software, chemical industry, building materials..." of a "customer sector" column name, or optional (corresponding) column name values "sales department I, sales department II, sales department III..." of a "department in charge of customer" column name, or optional (corresponding) column name values "Zhang San, Li Si, Wang Wu..." of a "person in charge of customer" column name, or optional (corresponding) column name values "Beijing, Shanghai, Guangzhou..." of a "customer city" column name, or the like (the column name value, that is, the data corresponding to the column name value, rather than the column name corresponding to the column name value, needs to be authorized with respect to the type of the column name value of the statistical list). The column name values of each column name corresponding to this type of column name value include a "null" column value and an "all/unlimited" column name value ("null" means "the column name value is null", and "all" means "all column name values"). The element items of the time-nature column name are "creation time" or "last modification time" of a column name in the statistical list or another time column name (for example, "creation time" and "last modification time" herein are both element items of a time-nature column name and element items of a column name in the statistical list). In addition, a column that includes a time-nature column name is necessarily statistics of time-nature data or content. Moreover, after an element item of a time-nature column name is selected, an operation of authorizing/setting this element is the same as the operation of authorizing/setting "after an element item of a time-nature field of the form is selected" in the present application).

The column name value of the statistical list is determined by selection (for example, the column name value of a column that includes a "customer sector" column name in a customer statistical list provides options such as manufacturing, finance, aviation, and other sectors. Such column name values are not manually input, but are determined by selection. For another example, the column name values of the column names such as "customer city", "department in charge of customer", "person in charge of customer", and "role in charge of customer" are also determined by selection) or determined automatically (for example, the column name values of the column names such as "creator", "recorder", "form preparation role", "form preparation user", and "form preparer" in the statistical list are automatically determined according to the relevant rules).

S23: displaying all system users in a system after the element item is selected, and displaying current permission status of each system user for the selected element item.

Further, after the element item is selected, all system users in the system are displayed, wherein "all system users in the system" are "all system users in the system who can be authorized by the selection operator".

The system users include a role, a user, an employee, a group, a class, a template, or one or more thereof.

The role is an independent individual not a group/class, and during the same period, one role can only be related to a unique user, while one user is related to one or more roles. When or after the role is created, the department is selected for the role, and therefore the role belongs to the department. The role is authorized according to the work content of the role, the name of the role is unique under the department, and the number of the role is unique in the system.

When the user is transferred from a post, the user's relation to the original role is canceled, and the user is related to a new role. Then, the role automatically loses the permissions of the original role, and automatically obtains the permissions of the new role.

When the employee is recruited, after the role is related to the user corresponding to the employee, the user automatically obtains the permissions of the related role. When the employee resigns, after the relation between the user corresponding to the employee and the role related to the user is canceled, the user automatically loses the permissions of the original related role.

After the role is created, a user may be related to the role in the process of creating the user, or may be related to the role at any time after the user is created. After the user is related to the role, the user can be released from the relation to the role at any time, and the relation of the user to another role may be created at any time.

One employee corresponds to one user, one user corresponds to one employee, and the employee determines (obtains) permissions through the role related to the corresponding user.

Further, the employee and the user are bound permanently. After the user corresponds to the employee, the user belongs to the employee, and the user can no longer be related to other employees. If the employee resigns, the user cannot correspond to other employees. After the employee is recruited again, the employee still uses the original user.

Further, after an element item in a type of statistical list element is selected, an authorizer who last authorizes the selected element item for each system user and time of such authorization are displayed separately.

S24: authorizing the selected element item for one or more of the system users.

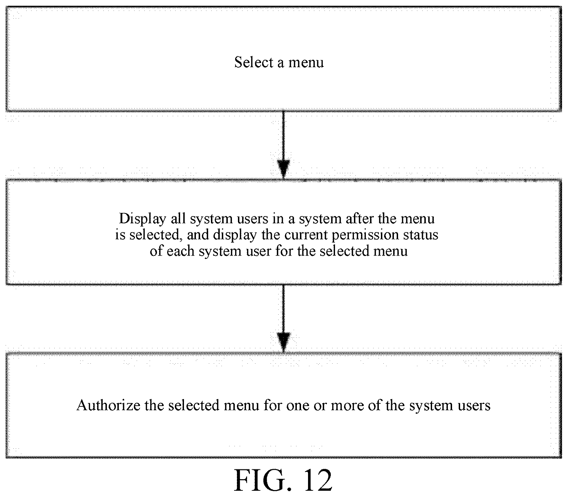

[Embodiment 3] As shown in FIG. 12, an authorization method for displaying current permission status of all system users comprising the following steps. S31: select one menu.

S32: displaying all system users in a system after the menu is selected, and displaying the current permission status of each system user for the selected menu.

Further, after the menu is selected, all system users in the system are displayed, wherein "all system users in the system" are "all system users in the system who can be authorized by the selection operator".

The system users include a role, a user, an employee, a group, a class, a template, or one or more thereof.

The role is an independent individual not a group/class, and during the same period, one role can only be related to a unique user, while one user is related to one or more roles. When or after the role is created, the department is selected for the role, and therefore the role belongs to the department. The role is authorized according to the work content of the role, the name of the role is unique under the department, and the number of the role is unique in the system.

When the user is transferred from a post, the user's relation to the original role is canceled, and the user is related to a new role. Then, the role automatically loses the permissions of the original role, and automatically obtains the permissions of the new role; that is, the user obtains the permissions of the related role.

When the employee is recruited, after the role is related to the user corresponding to the employee, the user automatically obtains the permissions of the related role. When the employee resigns, after the relation between the user corresponding to the employee and the role related to the user is canceled, the user automatically loses the permissions of the original related role.

After a role is created, a user may be related to the role in the process of creating the user, or may be related to the role at any time after the user is created. After the user is related to the role, the user can be released from the relation to the role at any time, and the relation between the user and another role may be created at any time.

One employee corresponds to one user, one user corresponds to one employee, and the employee determines (obtains) permission through the role related to the corresponding user.

Further, the employee and the user are bound permanently. After the user corresponds to the employee, the user belongs to the employee, and the user can no longer be related to other employees. If the employee resigns, the user cannot correspond to other employees. After the employee is recruited again, the employee still uses the original user.

Further, after a menu is selected, an authorizer who last authorizes the selected menu for each system user and the time of such authorization are displayed separately.

S33: authorizing the selected menu for one or more of the system users.

The above is only a preferred embodiment of the present invention. It should be understood that the present invention is not limited to the forms disclosed herein, and is not to be construed as the exclusion to the other embodiments, but may be used in various other combinations, modifications and environments. Modifications can be made according to the techniques or knowledge of the above teachings or related art within conceptive scope herein. All changes and modifications made by those skilled in the art are intended to be within the scope of the appended claims.

## Claims

1. An authorization method for displaying current permission status of all system users, comprising:
selecting one form;
selecting one element item of one of the elements of the form;
displaying all system users in the system after the element item is selected, and displaying current permission status of each system user for the selected element item; and
authorizing the selected element item for one or more of the system users.

2. The authorization method for displaying current permission status of all system users according to claim 1, wherein types of the form element comprise a form operation permission, a form field, a time-nature field, a form field value, or one or more thereof, and the form field value is determined by selection or determined automatically.

3. The authorization method for displaying current permission status of all system users according to claim 1, wherein the system users comprise a role, a user, an employee, a group, a class, a template, or one or more thereof, the role is an independent individual not a group/class, and during the same period, one role can only be related to a unique user while one user is related to one or more roles.

4. The authorization method for displaying current permission status of all system users according to claim 3, wherein when or after the role is created, a department is selected for the role, so that the role belongs to the department; the role is authorized according to its work content, a name of the role is unique in the department, and a number of the role is unique in the system; and
when said user is transferred from a post, the user's relation to an original role is canceled, and the user is related to a new role.

5. The authorization method for displaying current permission status of all system users according to claim 1, wherein after an element item in a type of form element is selected, an authorizer who last authorizes the selected element item for each system user and time of such authorization are displayed separately.

6. An authorization method for displaying current permission status of all system users, comprising:
selecting a statistical list;
selecting an element item in a type of statistical list element of the statistical list;
displaying all system users in a system after the element item is selected, and displaying current permission status of each system user for the selected element item; and
authorizing the selected element item for one or more of the system users.

7. The authorization method for displaying current permission status of all system users according to claim 6, wherein types of the statistical list element comprise an operation permission of statistical list, a column name in the statistical list, a time-nature column name, a column name value in the statistical list, or one or more thereof, and the column name value in the statistical list is determined by selection or determined automatically.

8. The authorization method for displaying current permission status of all system users according to claim 6, wherein the system users comprise a role, a user, an employee, a group, a class, a template, or one or more thereof, the role is an independent individual not a group/class, and during the same period, one role can only be related to a unique user while one user is related to one or more roles.

9. An authorization method for displaying current permission status of all system users, comprising:
selecting a menu;
displaying all system users in the system after the menu is selected, and displaying current permission status of each system user for the selected menu; and
authorizing the selected menu for one or more of the system users.

10. The authorization method for displaying current permission status of all system users according to claim 9, wherein the system users comprise a role, a user, an employee, a group, a class, a template, or one or more thereof, the role is an independent individual not a group/class, and during the same period, one role can only be related to a unique user while one user is related to one or more roles.
